Europäisches Patentamt

European Patent Office

Office européen des brevets

(11) Publication number : **0 592 237 A1**

# (12) EUROPEAN PATENT APPLICATION

(21) Application number : 93308018.6

(22) Date of filing : 08.10.93

(51) Int. Cl.$^5$ : **C03B 5/225,** C03C 3/087, C03C 4/08

(30) Priority : 09.10.92 GB 9221227

(43) Date of publication of application :
**13.04.94 Bulletin 94/15**

(84) Designated Contracting States :
**BE DE ES FR GB IT LU NL PT SE**

(71) Applicant : **PILKINGTON PLC**
**Prescot Road**
**St. Helens, Merseyside WA10 3TT (GB)**

(72) Inventor : **Bartlett, David Ronald**
**89 Broadway, Eccleston**
**St. Helens, Merseyside WA10 5PJ (GB)**
Inventor : **Dickinson, Clive Francis**
**55 Chorley Road, Standish**
**Wigan, Lancashire WN1 0SE (GB)**
Inventor : **Fyles, Kenneth Melvin**
**9 Langholm Road, Garswood**
**Wigan, Lancashire WN4 0SE (GB)**

(74) Representative : **Pendlebury, Anthony et al**
**PAGE, WHITE & FARRER 54 Doughty Street**
**London WC1N 2LS (GB)**

(54) **Glass compositions and process for manufacturing.**

(57)     Process for manufacturing a glass composition suitable for use as a face plate for a cathode ray tube, said process including the steps of melting a batch of glass-forming components, refining the molten glass, and forming the molten glass on a bath of molten tin into a finished glass composition in flat sheet form, wherein the melting and refining of the batch of glass-forming components is performed in the presence of a source of $SO_3$ which acts as a primary refining agent, together with at least one of :
     (a) strontium titanate which acts as a foam de-stabiliser, or
     (b) an alkaline earth metal sulphide, or
     (c) sulphur as auxiliary refining agents.
     Glass compositions for use as face plates for cathode ray tubes.

EP 0 592 237 A1

This invention relates to the manufacture of a glass composition which is suitable for use as a face plate for a cathode ray tube (CRT face plates) and which is to be formed on a molten tin bath, that is to say by a float glass process.

Glass compositions for making face plates for cathode ray tubes are well known. Typical glass compositions suitable for this purpose are described for example, in U.S. Patents 4015966, 4337410, 4390637, 4734388, 4786619, 5108960 and 5215944 and European Patent Specifications 131399, and 360965.

An important characteristic of such glass compositions is that they should absorb X-rays which are emitted by the cathode ray tube. However, many of such known glass compositions incorporate components which make it impossible to manufacture the glass compositions using the melting and forming procedures conventionally used in large scale float glass making plants.

Glasses for use in manufacturing CRT face plates may be melted on conventional fossil fuel fired furnaces often with a proportion of electric boost to assist the melting process. In such a melting process, the mixture of raw materials is continually fed to the furnace at one end using a suitable charging device. The raw material feed forms a blanket on the melt surface which slowly moves into the furnace and melts under the influence of the flames as it does so. The glass is then refined and conditioned before being formed into face plates, or a ribbon.

Glasses for use in CRT face plates can also advantageously be melted on a cold top electric melter when the economics of such a process are more favourable than conventional melting in fuel fired furnaces.

A cold top electric melter is so-called because the entire surface of the melter is covered with batch which forms a crust on top of the molten glass. As the batch melts, further batch is added to maintain the crust so that no molten surface is exposed and loss of heat by radiation from the molten glass surface is prevented. A stable crust must be maintained. Stability can be lost by excessive amounts of gas being evolved from the batch as it reacts before forming molten glass. Such gas can cause a mixture of molten glass and batch to be forced up into a cooler environment where it solidifies and forms a bridge. This bridge prevents the batch from feeding down to where it can melt, and can also cause exposure of the molten surface so that heat can radiate from the exposed surface. Radiation loss can lead to inefficient melting and can result in overheating of the mechanism which is used to feed batch to the melter. In order to obtain glass of a satisfactory quality on a consistent and controlled basis, it is necessary to maintain a uniform and stable melt-off across the whole area of the underside of the crust and to maintain the crust intact with no gaps where radiation loss can occur. The melt must then be refined and conditioned before feeding the molten glass to a forming process.

The choice of whether to use a cold top melter or a conventional fossil fuel melter is dictated primarily by demand. Glass can be melted in a cost effective manner in a cold top melter but there can be advantage in switching to a conventional fossil fuel furnace for economic reasons. It is advantageous therefore to have a glass composition which can be melted at the required quality and rate whatever type of furnace.

The forming of molten glass on a float bath into a continuous ribbon involves the flowing of molten glass from a source of molten glass onto a bath of molten tin. Glass formed on a float bath is identifiable by the presence of tin in the surface which was formed in contact with molten tin. In the float forming process, in order to protect the molten tin from the effects of contact with oxygen, a reducing atmosphere is maintained over the bath. The molten glass fed onto the bath must therefore be free of materials which react with the reducing atmosphere to form metallic particles.

Glasses for use in CRT face plates contain radiation absorbing components which are included for the purpose of absorbing X-rays. A common material for this purpose is lead oxide but molten glass fed to a float bath cannot contain lead compounds because metallic lead is formed in the glass forming operation on the float bath. Accordingly, known lead-containing glass compositions suitable for use in making CRT face plates can not be formed by a float glass process. Alternative radiation absorbing components for a CRT glass which are compatible with formation of glass by a float glass process are barium oxide and strontium oxide.

Conventional glass batches for producing molten glass to be used in making face plates by moulding in a press contain oxides of arsenic and antimony as refining agents. The presence of these refining agents in the glass batches renders such batches unsuitable for forming on a float bath because both arsenic and antimony will also form metallic particles at the glass surface owing to the reducing atmosphere which is present during the float process.

Thus, it will be appreciated that conventional refining agents cannot be used in glass batches which are to be melted in either a cold top electric melter or a fossil fuel fired furnace and then formed by a float process on a bath of molten tin.

In order to melt CRT face plate glass which is to be formed on a float bath not only must refining agents other than arsenic and antimony be used, but also optimisation of the batch composition is required in order to obtain the best conditions for refining. Such optimisation must not cause adverse melting conditions.

A viable alternative refining agent has been found to be a source of $SO_3$, e.g. sodium sulphate, but this has a higher solubility in the glass melts produced from CRT batches. In our U.S. Patent No. 4786619 we have described the use of a carbon and sodium sulphate combination for refining the glass, but this requires high levels of sulphate which is undesirable from an environmental point of view, and we have found that the glass-forming components could not be melted successfully on a cold top melter using these refining agents.

We have also found that when one attempts to refine a CRT face place glass which is to be formed on a bath of molten tin using a source of $SO_3$ as the principal refining agent and in the presence of carbonate materials in the batch of glass-forming materials, satisfactory refining is not achieved. Furthermore, when a cold top electric furnace is used to melt the batch, the crust stability of the batch is adversely affected.

We have now found that improved conditions for refining CRT batches which are to be formed on a float bath can be obtained by using a source of $SO_3$ as a primary refining agent in combination with at least one of strontium titanate - a foam de-stabilising agent, or an alkaline earth metal sulphide or sulphur as refining aids. Accordingly, the present invention provides a process for manufacturing a glass composition suitable for use as a face plate for a cathode ray tube, said process including the steps of melting a batch of glass-forming components, refining the molten glass, and forming the molten glass on a bath of molten tin into a finished glass composition in flat sheet form, characterised in that the melting and refining of the batch of glass-forming components is performed in the presence of a source of $SO_3$ which acts as a primary refining agent, together with at least one of:

(a) strontium titanate which acts as a foam de-stabiliser, or

(b) an alkaline earth metal sulphide, or

(c) sulphur as auxiliary refining agents.

The primary refining agent, which provides a source of $SO_3$, is preferably sodium sulphate, although calcium sulphate may also be used.

The quantity of primary refining agent which is used is such as to produce from 0.1 to 0.6 wt%, measured as $SO_3$, in the finished glass composition. Typical glass forming batches include the primary refining agent in amounts which produce from 0.15 to 0.5 wt%, most preferably 0.15 to 0.35 wt%, measured as $SO_3$, in the finished glass composition.

It is preferable when using sodium sulphate as the primary refining agent to ensure that the batch contains no added carbon, and not more than 0.04% carbon due to its presence in other raw materials. On an electric furnace the batch $SO_3$ content is equivalent to the target level of $SO_3$ in the glass. On a fuel fired furnace, however, it is necessary to add 10 wt% excess $SO_3$ in the batch to compensate for material lost during the melting process.

The alkaline earth metal sulphide which may be used as an auxiliary refining agent is preferably barium sulphide, calcium sulphide or strontium sulphide; most preferably barium sulphide is used.

The quantity of alkaline earth metal sulphide ranges from 0 to 5 kg, preferably from 2 to 5 kg, per tonne of glass forming materials.

The other auxiliary refining agent which may be used is sulphur. This may be present in an amount of from 0 to 1 kg, preferably from 0.25 to 1 kg, per tonne of glass forming materials.

Both of these auxiliary refining agents generate $SO_2$ gas which helps in the refining process to sweep bubbles of $CO_2$ out of the melt.

We have found that strontium titanate can play an important role in improving the efficiency of the melting and refining steps of the present process. Strontium titanate is typically used in an amount of from 0.7 to 1.6 wt%, based on the weight of the finished glass composition. This material, which is an inorganic detergent or wetting agent, appears to act as a foam de-stabiliser in the melting and refining stages of the process. It enables higher rates of melting to be achieved than usual, and also improves the high temperature stability of the batch of glass forming materials. It also provides at least part of the strontium oxide which acts as the required radiation absorbing material in the finished glass composition.

In the process of the present invention, the batch of glass-forming components usually incorporates barium carbonate and strontium carbonate which provide barium oxide and strontium oxide as radiation absorbing materials in the finished glass composition.

The batch of glass-forming components is melted and refined in conventional manner and then formed into flat glass sheet on a float tank.

By using the process of the present invention we have found it possible to melt the batches on either a conventional fuel fired furnace or a cold top electric melter.

The process of the present invention is capable of being operated at an effective batch melting rate of at least 2 tonnes of glass /m$^2$ /day.

A further advantage of the process of the present invention is that it enables the production of CRT face plates of very high "bubble quality". By using the combination of refining agents and/or foam de-stabilizer of the present invention, one is able to produce flat sheet on a float process having a bubble quality which meets

3

the most stringent demands of cathode ray tube manufacturers. The bubble quality of the glass obtained by the present process is usually such that the finished glass has not more than 1 bubble of a diameter greater than 0.25 mm per kg of finished glass.

An additional advantage of the present process is that it enables relatively large amounts of finished glass composition which has been cut away from the edges of the glass ribbon in forming the finished glass product to be recycled to the melting stages of the process. This recycled material is commonly known as "cullet".

It is very desirable, in order to minimize costs and improve the efficiency of production of CRT face places, to be able to formulate the batch composition in such a way that relatively large amounts of cullet can be recycled to the melting furnace whilst still obtaining glass at economic melting rates.

We have found that the present process can be operated with recycling of from 30 to 66 wt% of cullet.

The quantity of cullet obtained for recycling as a percentage of the glass being made in a given glass production plant will vary with the width of the ribbon of glass and the yield of saleable glass; the glass composition being made must therefore be compatible with a range of cullet additions.

It is desirable to be able to melt the glass at a rate of at least 2 tonne/m$^2$/day to ensure effective use of furnace and float bath even when cullet is being used in relatively large quantities. Quantities of cullet in the range 30 to 66 wt% can be used continuously in the present process.

The process of the present invention enables one to produce economically on a float glass production line a glass composition formulated for use in making face plates for cathode ray tubes (CRT face plates).

Typical glass compositions which can be made using the process of the present invention are X-ray absorbing glass compositions which are free of lead, zinc, arsenic, antimony and fluorine, and which comprise the following components expressed in wt%, based on the total weight of the glass composition:-

| | |
|---|---|
| $SiO_2$ | 50 - 75% |
| $Al_2O_3$ | 0 - 6% |
| $Li_2O$ | 0 - 4% |
| $Na_2O$ | 3 - 15% |
| $K_2O$ | 0 - 15% |
| $Li_2O+Na_2O+K_2O$ | 5 - 24% |
| MgO | 0 - 5% |
| CaO | 0 - 10% |

| | |
|---|---|
| SrO | 0 - 20% |
| BaO | 0 - 20% |
| $ZrO_2$ | 0 - 10% |
| SrO + BaO | 5 - 25% |
| $TiO_2$ | 0 - 2% |
| $CeO_2$ | 0 - 3% |
| $SO_3$ | 0.15 - 0.5%. |

These glass compositions are formulated specifically to be manufactured on a float glass production line. For this reason, any material which is traditionally added to cathode ray tube glasses and which will easily reduce to a metal under the reducing conditions present in a float bath must of necessity be excluded from the composition. Thus, the finished glass composition must typically exclude PbO, ZnO, $As_2O_3$ and $Sb_2O_3$.

In addition, fluorine, which is used as a melt and refining aid in many cathode ray tube compositions must also be excluded, because fluorine contaminates the bath of molten tin and causes undesired staining of the glass sheet.

In these glasses, $SiO_2$ is the principal glass former. $Li_2O$, $Na_2O$ and $K_2O$ are fluxes to melt the glass and also are adjusted to give the glass the required expansion coefficient. MgO and CaO are composition modifiers. SrO, BaO and $ZrO_2$ are the principal X-ray absorbers which must be present in an amount greater than 5% in CRT glasses to provide the specified X-ray absorbance. $TiO_2$ and $CeO_2$ stabilize most glasses against radiation damage and X-ray browning. $Al_2O_3$ helps to stabilize the glasses against devitrification.

Particularly preferred glass compositions formulated to be manufactured on a flat glass line and which are particularly suited for refining by the process of the present invention are X-ray absorbing glass compositions which are free of lead, zinc, arsenic, antimony and fluorine, and which consist of the following components expressed in wt%, based on the total weight of the glass composition:-

| | |
|---|---|
| $SiO_2$ | 57 - 63% |
| $Al_2O_3$ | 1 - 4% |
| $Li_2O$ | 0.1 - 1% |
| $Na_2O$ | 6.5 - 9% |
| $K_2O$ | 6.5 - 9% |
| $Li_2O+Na_2O+K_2O$ | 14 - 16% |
| MgO | 0.3 - 3% |
| CaO | 0.5 - 5% |

with the proviso that MgO + CaO > 2 when $Li_2O$ < 0.3

| | |
|---|---|
| SrO | 6.5 - 10% |
| BaO | 6.5 - 10% |
| $ZrO_2$ | 1.5 - 2.7% |
| SrO + BaO | 15 - 17% |
| SrO + BaO + $ZrO_2$ | 18 - 20% |
| $TiO_2$ | 0.3 - 0.7% |
| $CeO_2$ | 0.3 - 1% |
| $SO_3$ | 0.15 - 0.5% |

Especially preferred are glass compositions of this group of glasses in which the amounts of the following components fall within the following ranges, expressed in wt%, based on the total weight of the glass composition:-

| | |
|---|---|
| $Al_2O_3$ | 2 - 4% |
| $Li_2O$ | 0.3 - 1% |
| SrO | 6.5 - 9% |
| BaO | 6.5 - 9% |
| $ZrO_2$ | 2 - 2.6%. |

This particularly preferred range of glass compositions prepared in accordance with the present process incorporates BaO and SrO as radiation absorbing materials which are present in amounts sufficient to make the linear absorption coefficient (LAC) of the glass at 0.6 Angstrom wavelength at least 28 per cm - this is a requirement for most colour televisions. The total amount of SrO and BaO is from 15 to 17 wt% in order to provide this required absorption. The maximum amount of SrO is limited to 9 wt% and the maximum amount of BaO is limited to 9 wt% in order to ensure that the liquidus temperature of the glass is kept below 1000°C as measured after a period of 66 hours in a temperature gradient furnace.

$ZrO_2$ is also included in the glass composition to improve the linear absorption coefficient of the glass in concert with SrO and BaO. The minimum quantity of $ZrO_2$ is 1.5 wt%, preferably 2 wt%, so as to provide the minimum required LAC in combination with SrO + BaO, whilst $ZrO_2$ levels greater than 2.7 wt% lead to unacceptably high liquidus temperatures greater than 1000°C (after 66 hours in a temperature gradient furnace). To provide the necessary LAC for the glasses, the total amount of SrO + BaO + $ZrO_2$ must be from 18 to 20 wt%.

$Li_2O$ is present to improve the fluidity of the melt during refining. When $Li_2O$ is below 0.3 wt%, the fluidity of the melt must be improved by increasing the quantities of MgO + CaO to greater than 2 wt%. The content of $Li_2O$ is preferably at least 0.3 wt% . $Na_2O$ and $K_2O$ also improve the fluidity of the melt (though much less than $Li_2O$), and mainly control the expansion of the final glass which must be within the limits 97 - 103 x $10^{-7}$ per °C. The ranges of $Li_2O$, $Na_2O$ and $K_2O$ are therefore governed by the need to provide melts which are easily melted and refined in a conventional float tank whilst at the same time ensuring that the finished glass has a coefficient of expansion of 97 - 103 x $10^{-7}$ per °C. For efficient melting and refining, the glass must have a temperature at a viscosity of 100 poise (log 2) of less than 1450°C, preferably less than 1430°C.

MgO and CaO are included in the glass composition to assist a phase-in of television glass into a float glass production tank which normally produces window glass. Window glass contains about 4 wt% Mg0 and 8 wt% CaO and television glass compositions which are essentially free of MgO or CaO would take an uneconomically long time to become established in a float glass production tank. The overall demand for television glass is not sufficient at present to permit a float unit to be dedicated exclusively to the manufacture of such glass. A further function of MgO and CaO is to assist in the process of refining the glass composition. If the upper limit of either of these two components is exceeded, the liquidus temperature of the glass becomes unacceptably high.

$Al_2O_3$ forms part of the glass composition because it is invariably an impurity in the silica source. $Al_2O_3$ may also be added deliberately, particularly if the lithium is added to the batch mix as a mineral such a spodumene (lithium aluminium silicate). Spodumene is a relatively cheap source of lithium. $Al_2O_3$ helps to stabilize the glass against devitrification and is present in an amount of at least 1 wt%, preferably at least 2 wt%.

$CeO_2$ and $TiO_2$ are conventional additives which are used in glass compositions for use in making face plates for colour televisions. These materials are incorporated for the purpose of stabilizing the glass against radiation damage minimising the incidence of X-ray browning.

If desired, the glass compositions may be tinted in conventional manner with $Co_3O_4$, NiO, $Cr_2O_3$ and/or Se.

The liquidus temperature ($T_l$) of the glass composition should be no greater than 1000°C, measured after 66 hours in a temperature gradient furnace.

Glass compositions formed by a float process on a bath of molten tin are usually formed at a viscosity of 10,000 poise (log 4). The temperature of the composition at this viscosity is generally referred to as the working temperature ($T_w$). For the present glass compositions $T_w$ ranges from 970 - 1025°C.

In preferred operating conditions, the working temperature ($T_w$) of the glass must be higher than the liquidus temperature ($T_l$) of the glass. This helps to avoid the development of crystalline phases in more stagnant areas of the float production tank which would cause faults in the finished glass composition. For these reasons, $T_w$ - $T_l$ is preferably a positive value.

In order to avoid problems when the glass composition is removed from the bath of molten tin, the softening point (log viscosity 7.6) of the glass composition should not be too low, i.e. it should be greater than 680°C, preferably greater than 690°C. It is this characteristic which limits the quantity of $Li_2O$ to a maximum of 1% by weight. Although $Li_2O$ has the beneficial effect of reducing the viscosity of the glass at the refining temperatures, it can also cause undesired lowering of the softening point of the glass to a value below 680°C.

A further desired characteristic is that for effecting good refining of the glass composition, it should manifest a temperature of less than 1450°C, preferably less than 1430°C, at a viscosity of 100 poise (log 2).

The linear expansion coefficient of the glass composition ranges from 97 - 103 x $10^{-7}$ per °C. Electrical resistivity is found to be better than $10^7$ ohm/cm. at 350°C.

The present invention is illustrated further, by way of example only, by the following Examples.

Examples 1 to 8 in Table 1 set out typical batch compositions which were melted in usual manner on a cold top electric melter. The quantities of the raw materials in Table 1 are given in kg per tonne of batch. The melter was operated continuously at a batch feed rate sufficient to maintain a melt rate equivalent to 2 tonne per metre square per day with a power input sufficient to achieve a melter temperature of 1383°C. Each of the batches of Examples 1 to 8 produced the same glass having a composition as given for Glass A in Table 2. Table 2 also sets out the physical characteristics of the glass composition.

In Table 1, Spanish dolomite is a carbonate of calcium and magnesium, soda ash is sodium carbonate, spodumene is lithium aluminium silicate and is used as a source of lithium, zircosil is a mixture of $ZrO_2$ and $SiO_2$ and is used as a source of zirconium, and saltcake is a source of sodium sulphate.

The batch of Example 1, which is not an example of the process of the present invention and is given for the purposes of comparison, gave problems with blanket stability during the melting operation. The target bubble count of not more than 1 per kg with a diameter in excess of 0.25 mm in the glass could not be achieved under these conditions.

In the case of Example 2, the presence of barium sulphide enables the target bubble count to be achieved and cullet to be blended with the batch at levels 30 to 66 wt% cullet while still maintaining the same melt rate.

Examples 3 to 6 are further batch compositions in which other modifications have been made to the batch while still producing the same glass composition:-

Example 3 shows the use of higher levels of barium sulphide, while Example 4 and Example 5 demonstrate the use of strontium titanate in the absence and presence, respectively, of barium sulphide. Example 6 uses a lower amount of saltcake (sodium sulphate). Examples 7 and 8 show the use of sulphur rather than barium sulphide.

In all cases, except Example 4 (which contained no barium sulphide), good quality glass (i.e. glass having achieved the target bubble count) was obtained and cullet levels in the range 30 to 66 wt% could be used.

Similar batches but with 10 wt% higher sodium sulphate levels can be melted in a fossil fuel furnace without any adverse effects.

Glasses B and C in Table 2 are two further examples of a CRT glass composition within the particularly preferred glass composition range. These glass compositions were refined in accordance with the process of the present invention. The composition and physical characteristics of the glasses are given in Table 2.

TABLE 1

| Raw Material Requirements Per Tonne of Batch | | | | |
|---|---|---|---|---|
| Ingredient | Ex.1 kg | Ex.2 kg | Ex.3 kg | Ex.4 kg |
| Belgian MAM sand | 420.00 | 420.00 | 420.00 | 420.00 |
| Barium carbonate | 94.00 | 92.40 | 90.40 | 92.40 |
| Barium sulphide | - | 1.75 | 3.46 | - |
| Cerium oxide | 4.40 | 4.40 | 4.40 | 4.40 |
| Spanish dolomite | 15.60 | 15.60 | 15.60 | 15.60 |
| Potassium carbonate | 96.40 | 96.40 | 96.40 | 96.40 |
| Soda ash | 96.00 | 96.60 | 98.00 | 98.00 |
| Spodumene | 118.80 | 118.80 | 118.80 | 118.80 |
| Strontium carbonate | 104.00 | 104.00 | 104.00 | 100.00 |
| Titanium dioxide | 4.40 | 4.40 | 4.40 | - |
| Zircosil | 34.00 | 34.00 | 34.00 | 34.00 |
| Saltcake | 5.00 | 4.17 | 3.90 | 3.90 |
| Strontium titanate | - | - | - | 9.60 |
| Sulphur | - | - | - | - |
| | | | | |
| Ingredient | Ex.5 kg | Ex.6 kg | Ex.7 kg | Ex.8 kg |
| Belgian MAM sand | 420.00 | 420.00 | 421.00 | 420.40 |
| Barium carbonate | 92.40 | 92.40 | 91.76 | 91.62 |
| Barium sulphide | 1.74 | 1.74 | - | - |
| Cerium oxide | 4.40 | 4.40 | 4.48 | 4.47 |
| Spanish dolomite | 15.60 | 15.60 | 15.56 | 15.54 |
| Potassium carbonate | 96.40 | 96.40 | 96.64 | 96.50 |
| Soda ash | 98.00 | 98.80 | 99.14 | 99.00 |
| Spodumene | 118.80 | 118.80 | 119.20 | 119.00 |
| Strontium carbonate | 100.00 | 104.00 | 105.22 | 105.10 |
| Titanium dioxide | - | 4.40 | - | - |
| Zircosil | 34.00 | 34.00 | 34.11 | 34.06 |
| Saltcake | 3.90 | 2.80 | 3.10 | 3.10 |
| Strontium titanate | 9.60 | - | 9.54 | 9.50 |
| Sulphur | - | - | 0.22 | 1.73 |

EP 0 592 237 A1

TABLE 2

| CRT Glass Compositions | | | |
|---|---|---|---|
| | GLASS A | GLASS B | GLASS C |
| Oxide | wt% | wt% | wt% |
| $SiO_2$ | 60.10 | 58.75 | 57.2 |
| $Al_2O_3$ | 2.70 | 2.1 | 3.1 |
| $TiO_2$ | 0.50 | 0.5 | 0.5 |
| CaO | 0.60 | 2.8 | 3.0 |
| MgO | 0.40 | 0.8 | 1.2 |
| $Na_2O$ | 6.90 | 7.5 | 7.8 |
| $K_2O$ | 7.60 | 7.5 | 7.0 |
| BaO | 8.40 | 8.9 | 7.8 |
| $ZrO_2$ | 2.60 | 2.6 | 2.0 |
| SrO | 8.50 | 7.5 | 8.8 |
| $CeO_2$ | 0.50 | 0.5 | 0.5 |
| $Fe_2O_3$ | 0.03 | 0.04 | 0.02 |
| $Li_2O$ | 0.68 | 0.35 | 0.9 |
| $SO_3$ | 0.28 | 0.2 | 0.2 |
| | | | |
| Softening point : | 695°C | 708°C | 684°C |
| Liquidus temperature ($T_l$) : | 930°C | 903°C | 979°C |
| Working temperature ($T_w$) : | 1001°C | 1015°C | 986°C |
| $T_w$ - $T_l$ : | 71°C | 112°C | 7°C |
| Coefficient of linear expansion $x10^{-7}$ : | 100/°C | 103/°C | 102/°C |
| Temperature at 100 poise (log 2) : | 1425°C | 1429°C | 1395°C |
| Linear absorption coefficient (LAC) at 0.6A wavelength : | 29.2/cm | 28.6/cm | 28.7/cm |

## Claims

1. A process for manufacturing a glass composition suitable for use as a face plate for a cathode ray tube, said process including the steps of melting a batch of glass-forming components, refining the molten glass, and forming the molten glass on a bath of molten tin into a finished glass composition in flat sheet form, characterised in that the melting and refining of the batch of glass-forming components is performed in the presence of a source of $SO_3$ which acts as a primary refining agent, together with at least one of:
   (a) strontium titanate which acts as a foam de-stabiliser, or
   (b) an alkaline earth metal sulphide, or
   (c) sulphur as auxiliary refining agents.

9

2. A process according to claim 1, wherein the primary refining agent is sodium sulphate or calcium sulphate.

3. A process according to claim 1 or 2, wherein the amount of the primary refining agent is such as to produce from 0.1 to 0.6 wt%, measured as $SO_3$, in the finished glass composition.

4. A process according to claim 3, wherein the amount of the primary refining agent is such as to produce from 0.15 to 0.5 wt%, preferably 0.15 to 0.35, measured as $SO_3$, in the finished glass composition.

5. A process according to any one of the preceding claims, wherein the alkaline earth metal sulphide is selected from barium sulphide, calcium sulphide or strontium sulphide.

6. A process according to claim 5, wherein the amount of the alkaline earth metal sulphide is from 2 to 5 kg per tonne of glass-forming materials.

7. A process according to any one of the preceding claims, wherein the amount of sulphur is from 0.25 to 1 kg per tonne of glass forming materials.

8. A process according to any one of the preceding claims, wherein the amount of strontium titanate used is 0.7 to 1.6 wt%, based on the weight of the finished glass composition.

9. A process according to any one of the preceding claims, wherein the finished glass composition has not more than 1 bubble of a diameter greater than 0.25 mm per kg of glass.

10. A process according to any one of the preceding claims, wherein the process is operated at a melting rate of at least 2 tonne /m$^2$/day.

11. A process according to any one of the preceding claims, wherein from 30 to 66 wt% of finished glass composition in the form of cullet is recycled to the melting step of the process.

12. A process according to any one of the preceding claims, wherein the glass composition is a glass composition which is free of lead, zinc, arsenic, antimony and fluorine, and comprises the following components, expressed in wt%, based on the total weight of the glass composition:-

| | |
|---|---|
| $SiO_2$ | 50 - 75% |
| $Al_2O_3$ | 0 - 6% |
| $Li_2O$ | 0 - 4% |
| $Na_2O$ | 3 - 15% |
| $K_2O$ | 0 - 15% |
| $Li_2O+Na_2O+K_2O$ | 5 - 24% |
| $MgO$ | 0 - 5% |
| $CaO$ | 0 - 10% |

| | |
|---|---|
| SrO | 0 - 20% |
| BaO | 0 - 20% |
| ZrO$_2$ | 0 - 10% |
| SrO + BaO | 5 - 25% |
| TiO$_2$ | 0 - 2% |
| CeO$_2$ | 0 - 3% |
| SO$_3$ | 0.15 - 0.5%. |

13. A process according to claim 12, wherein the glass composition is a glass composition which is free of lead, zinc, arsenic, antimony and fluorine, and consists of the following components, expressed in wt%, based on the total weight of the glass composition:-

| | |
|---|---|
| SiO$_2$ | 57 - 63% |
| Al$_2$O$_3$ | 1 - 4% |
| Li$_2$O | 0.1 - 1% |
| Na$_2$O | 6.5 - 9% |
| K$_2$O | 6.5 - 9% |
| Li$_2$O+Na$_2$O+K$_2$O | 14 - 16% |
| MgO | 0.3 - 3% |
| CaO | 0.5 - 5% |

with the proviso that MgO + CaO > 2 when Li$_2$O < 0.3

| | |
|---|---|
| SrO | 6.5 - 10% |
| BaO | 6.5 - 10% |
| ZrO$_2$ | 1.5 - 2.7% |
| SrO + BaO | 15 - 17% |
| SrO + BaO + ZrO$_2$ | 18 - 20% |
| TiO$_2$ | 0.3 - 0.7% |
| CeO$_2$ | 0.3 - 1% |
| SO$_3$ | 0.15 - 0.5%. |

14. A process according to claim 13, wherein the glass composition is one in which the following components are present in the following amounts, expressed in wt %, based on the total weight of the glass composition:-

| Al$_2$O$_3$ | 2 - 4% |
|---|---|
| Li$_2$O | 0.3 - 1% |
| SrO | 6.5 - 9% |
| BaO | 6.5 - 9% |
| ZrO$_2$ | 2 - 2.6% |

15. A process according to claim 13 or 14, wherein the glass composition consists of the following components, expressed in wt%, based on the total weight of the glass composition:-

| SiO$_2$ | 60.10 |
|---|---|
| Al$_2$O$_3$ | 2.70 |
| TiO$_2$ | 0.50 |
| CaO | 0.60 |
| MgO | 0.40 |
| Na$_2$O | 6.90 |
| K$_2$O | 7.60 |
| BaO | 8.40 |
| ZrO$_2$ | 2.60 |
| SrO | 8.50 |
| CeO$_2$ | 0.50 |
| Fe$_2$O$_3$ | 0.02 |
| Li$_2$O | 0.68 |
| SO$_3$ | 0.28 |

16. A glass composition suitable for use as a face plate for a cathode ray tube, which glass composition is free of lead, zinc, arsenic, antimony and fluorine, and which comprises the following components, expressed in wt%, based on the total weight of the glass composition:-

| | |
|---|---|
| SiO$_2$ | 57 - 63% |
| Al$_2$O$_3$ | 1 - 4% |
| Li$_2$O | 0.1 -1% |
| Na$_2$O | 6.5 - 9% |
| K$_2$O | 6.5 - 9% |
| Li$_2$O+Na$_2$O+K$_2$O | 14 - 16% |
| MgO | 0.3 - 3% |
| CaO | 0.5 - 5% |

with the proviso that MgO + CaO > 2 when Li$_2$O < 0.3

| | |
|---|---|
| SrO | 6.5 - 10% |
| BaO | 6.5 - 10% |
| ZrO$_2$ | 1.5 - 2.7% |
| SrO + BaO | 15 - 17% |
| SrO + BaO + ZrO$_2$ | 18 - 20% |
| TiO$_2$ | 0.3 - 0.7% |
| CeO$_2$ | 0.3 - 1% |
| SO$_3$ | 0.15 - 0.5% |

17. A glass composition according to claim 16, wherein the amount of Al$_2$O$_3$ is from 2 to 4 wt%.

18. A glass composition according to claim 16 or 17, wherein the amount of Li$_2$O is from 0.3 to 1 wt%.

19. A glass composition according to claim 16, 17 or 18, wherein the amount of SrO is from 6.5 to 9 wt% and the amount of BaO is from 6.5 to 9 wt%.

20. A glass composition according to any one of claims 16 to 19, wherein the amount of ZrO$_2$ is from 2 to 2.6 wt%.

21. A glass composition according to claim 16, wherein the glass composition consists of the following components, expressed in wt %, based on the total weight of the glass composition:-

| | |
|---|---|
| SiO$_2$ | 60.10 |
| Al$_2$O$_3$ | 2.70 |
| TiO$_2$ | 0.50 |
| CaO | 0.60 |
| MgO | 0.40 |
| Na$_2$O | 6.90 |
| K$_2$O | 7.60 |
| BaO | 8.40 |
| ZrO$_2$ | 2.60 |
| SrO | 8.50 |
| CeO$_2$ | 0.50 |
| Fe$_2$O$_3$ | 0.02 |
| Li$_2$O | 0.68 |
| SO$_3$ | 0.28 |

22. A glass composition according to claim 16, wherein the glass composition consists of the following components, expressed in wt %, based on the total weight of the glass composition:-

| | |
|---|---|
| SiO$_2$ | 58.75 |
| Al$_2$O$_3$ | 2.1 |
| TiO$_2$ | 0.5 |
| CaO | 2.8 |
| MgO | 0.8 |
| Na$_2$O | 7.5 |
| K$_2$O | 7.5 |
| BaO | 8.9 |
| ZrO$_2$ | 2.6 |
| SrO | 7.5 |
| CeO$_2$ | 0.5 |
| Fe$_2$O$_3$ | 0.04 |
| Li$_2$O | 0.35 |
| SO$_3$ | 0.2 |

23. A glass composition according to claim 16, wherein the glass composition consists of the following components, expressed in wt %, based on the total weight of the glass composition:-

**EP 0 592 237 A1**

| | |
|---|---|
| $SiO_2$ | 57.2 |
| $Al_2O_3$ | 3.1 |
| $TiO_2$ | 0.5 |
| CaO | 3.0 |
| MgO | 1.2 |
| $Na_2O$ | 7.8 |
| $K_2O$ | 7.0 |
| BaO | 7.8 |
| $ZrO_2$ | 2.0 |
| SrO | 8.8 |
| $CeO_2$ | 0.5 |
| $Fe_2O_3$ | 0.02 |
| $Li_2O$ | 0.9 |
| $SO_3$ | 0.2 |

24. A face plate for a cathode ray tube, which face plate comprises an X-ray absorbing glass composition which has been made by a process as claimed in any one of claims 1 to 15.

25. A face plate for a cathode ray tube made from a glass composition as claimed in any one of claims 16 to 23.

**15**

European Patent
Office

# EUROPEAN SEARCH REPORT

Application Number

| DOCUMENTS CONSIDERED TO BE RELEVANT | | | EP 93308018.6 |
|---|---|---|---|

| Category | Citation of document with indication, where appropriate, of relevant passages | Relevant to claim | CLASSIFICATION OF THE APPLICATION (Int. Cl.5) |
|---|---|---|---|
| D,X | US - A - 4 786 619 (GERRARD ET AL) * Column 3, line 21 - column 4, line 10; claims * | 16-18 | C 03 B 5/225 C 03 C 3/087 C 03 C 4/08 |
| A | | 1-6, 12-15, 21-25 | |
| D,X | EP - A - 0 131 399 (CORNING GLASS WORKS) * Claim 1 * | 16-20, 25 | |
| D,A | EP - A - 0 360 965 (CORNING GLASS WORKS) * Claims * | 16-20, 25 | |
| D,A | US - A - 4 015 966 (WEAVER) * Column 2, lines 7-44 * | 16-20, 25 | |

TECHNICAL FIELDS
SEARCHED (Int. Cl.5)

C 03 B
C 03 C
H 01 J

The present search report has been drawn up for all claims

| Place of search | Date of completion of the search | Examiner |
|---|---|---|
| VIENNA | 20-01-1994 | HAUSWIRTH |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)